# EUROPÄISCHE PATENTSCHRIFT

(11) **EP 1 153 236 B1**
(45) Veröffentlichungstag und Bekanntmachung des Hinweises auf die Patenterteilung: **11.09.2002**
(21) Anmeldenummer: 99968393.1
(22) Anmeldetag: 29.12.1999
(51) Int. Cl.: F16L 25/00, F16L 33/26

(54) **KUPPLUNG FÜR STAHLWENDELSCHLÄUCHE**
COUPLING FOR CORRUGATED FLEXIBLE HOSE
RACCORD POUR TUYAUX A SPIRALE D'ACIER

(30) Priorität: 20.02.1999 DE 19907412
(43) Veröffentlichungstag der Anmeldung: 14.11.2001
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: Cohausz & Florack
(86) Internationale Anmeldenummer: EP9910444
(87) Internationale Veröffentlichungsnummer: WO00049325

(56) Entgegenhaltungen:
- WO-A-98/40656
- DE-A- 2 849 880
- DE-A- 3 104 518
- DE-A- 19 640 742
- US-A- 4 795 197

## Beschreibung

Die Erfindung betrifft eine Schlauchkupplung mit einer aus wenigstens zwei Teilschalen gebildeten, den Schlauch umfassenden Schelle und einem über einen Bolzen am freien Umfangsende eines der Teilschalen angelenkten Spannhebel, der zur kraftschlüssigen Verbindung zwischen dem Schlauch und einer darin eingeschobenen Tülle über eine Schließfeder mit dem anderen freien Umfangsende der korrespondierenden Teilschale verbindbar ist, wobei die Klemmbacke mittels einem auf der Tülle axial unverschiebbar angeordneten Flansch in axialer Richtung auf der Tülle fixierbar ist

Kupplungen für Schläuche sind in vielerlei Ausführungen bekannt. So ist eine gattungsgemäße Schlauchkupplung aus der auf den Anmelder zurückgehenden DE 28 49 880 A1 bekannt.

Des weiteren beschreibt die DE 36 01 093 C2 eine solche Schlauchkupplung, bei der zwei Teilschalen gelenkig miteinander verbunden sind. Diese bekannte Kupplung läßt sich nur für herkömmliche Schlauche, nicht aber für Stahlwendelschläuche einsetzen.

Stahlwendelschläuche sind dünnwandige KunststoffSchläuche mit einer einvulkanisierten Stahlspirale. Für diese Stahlwendelschläuche, die in der Industrie eine immer größere Anwendung finden, gibt es keine Schnellkupplungen auf dem Markt. Daher müssen die Schläuche stets mit verhältnismäßig aufwendigen Verschraubungen eingebunden werden.

Der Erfindung liegt daher die Aufgabe zugrunde, eine Armatur zu schaffen, die geeignet ist, als Schnellkupplung für Stahlwendelschläuche zu dienen. Weiterhin ist erwünscht, daß die Kupplung konstruktiv einfach aufgebaut und kostengünstig herstellbar ist.

Gelöst wird diese Aufgabe durch eine Kupplung für Stahlwendelschläuche gemäß dem Oberbegriff von Anspruch 1, die dadurch gekennzeichnet ist, daß die Schelle mehrere Teilschalen aufweist und als sogenannte Klemmbacke einstückig aus Kunststoff hergestellt ist, wobei die Verbindung/en zwischen den Teilschalen als Filmscharnier/e ausgebildet ist/sind, daß als Schlauch ein Stahlwendelschlauch zur Anwendung kommt und daß die Teilschalen im Inneren der Klemmbacke eine spiralförmig verlaufende Rille zur Aufnahme der Stahlwendel des Stahlwendelschlauches aufweisen und so den Stahlwendelschlauch formschlüssig umgreifen.

Erfindungsgemäß wird zuverlässig eine formschlüssige Verbindung zwischen Klemmbacke und Schlauch erreicht und eine Armatur bereitgestellt, die als Kupplung zur Verlängerung und/oder zum Anschluß von Stahlwendelschläuchen verwendet werden kann, wodurch die Attraktivität der Verwendung von Stahlwendelschläuchen weiter erhöht wird. Die erfindungsgemäße Kupplung zeichnet sich durch einen konstruktiv einfachen Aufbau und ihre kostengünstige Herstellung aus.

Zur Erhöhung des Kraftschlusses zwischen Schlauch und Tülle sieht eine weitere Lehre der Erfindung vor, daß die Teilschalen im Inneren der Klemmbacke wenigstens eine parallel zur spiralförmigen Rille verlaufende stegartige Erhöhung aufweisen. Mit dieser Ausgestaltung ist zuverlässig gewährleistet, daß sich das auf der Tülle befindliche Schlauchende nicht aus der Klemmbacke "herausschrauben" läßt.

Eine weitere Lehre der Erfindung sieht vor, daß der auf der Tülle zur Aufnahme des Axialzuges befindliche Flansch als Ringbund ausgebildet ist und daß die Teilschalen im Inneren der Klemmbacke eine zur Aufnahme des Ringbundes vorgesehene Ringnut aufweisen.

Bei einer alternativen Ausgestaltung der Erfindung weist die Tülle an ihrem dem Schlauch abgewandten freien Ende einen Flansch auf, der mit der Klemmbacke beweglich verbunden ist. Bevorzugt weist bei dieser Ausführungsform der Flansch einen Steg auf, der mit einem Langloch versehen ist, daß von einem den Spannhebel mit der Klemmbacke verbindenden Bolzen durchquert wird. Diese Ausführungsform stellt damit durch die Verbindung von Klemmbacke und Tülle eine "unverlierbare" Kupplung dar.

In weiterer Ausgestaltung der Erfindung sieht die Kupplung gemäß der vorbeschriebenen Ausführungsform einen Flansch vor, der axial unverschiebbar, jedoch drehbar auf der Tülle angeordnet ist. Diese Drehbarkeit hat den Vorteil, daß sich die Tülle in der Klemmbacke drehen läßt, so daß vor dem Verschließen der Kupplung die Stahlwendel des Schlauches auf die Formgebung der Klemmbacke auf einfache Weise ausgerichtet werden kann, ohne daß der Schlauch auf der Tülle passend gedreht werden müßte.

Zur weiteren Erhöhung der Abdichtung zwischen Schlauch und Tülle ist vorgesehen, daß die Tülle in ihrem vom Schlauchende übergriffenen Bereich eine Ringnut aufweist, in die eine Dichtung eingelegt ist, die bevorzugt als O-Ring/Ringschnurring ausgebildet ist.

Schließlich ist zum Erreichen einer langen Standzeit der erfindungsgemäßen Kupplung vorgesehen, daß der Spannhebel aus Edelstahl besteht. Wenn die Schließfeder an einem parallel zum Bolzen angeordneten Stift angelenkt ist, bestehen bevorzugt der Bolzen, der Stift und/oder die Schließfeder aus rostfreiem Stahl. So läßt sich die erfindungsgemäße Kupplung auch in einer aggressiven Umgebung dauerhaft einsetzen.

Nachfolgend wird die Erfindung anhand einer lediglich bevorzugte Ausführungsbeispiele darstellenden Zeichnung näher erläutert. In der Zeichnung zeigen
- Fig. 1A: ein erstes Ausführungsbeispiel der erfindungsgemäßen Kupplung, ohne Schlauch und Tülle in geschlossener Stellung in Draufsicht,
- Fig. 1B: die Kupplung gemäß Fig. 1A in geöffneter Stellung,
- Fig. 2: die Kupplung aus Fig. 1A in Seitenansicht, jedoch mit daran enthaltener Tülle und in teilweise aufgebrochener Darstellung,
- Fig. 3A: die Kupplung gemäß Fig. 1A, mit Tülle und (teilweise aufgebrochenem) Schlauch im Längsschnitt,
- Fig. 3B: eine vergrößerte Darstellung des Kreises "X" aus Fig. 3A,
- Fig. 4: die Kupplung gemäß Fig. 1A im Querschnitt entlang der Linie IV-IV aus Fig. 3A,
- Fig. 5A: ein weiteres Ausführungsbeispiel der erfindungsgemäßen Kupplung, ohne Schlauch, in geschlossener Stellung in Draufsicht,
- Fig. 5B: die Kupplung gemäß Fig. 5A in geöffneter Stellung,
- Fig. 6: die Kupplung aus Fig. 5A in Seitenansicht, in teilweise aufgebrochener Darstellung,
- Fig. 7: die Kupplung gemäß Fig. 5A, mit (teilweise aufgebrochenem) Schlauch im Längsschnitt,
- Fig. 8: die Kupplung gemäß Fig. 1A im Querschnitt entlang der Linie VIII-VIII aus Fig. 3A,

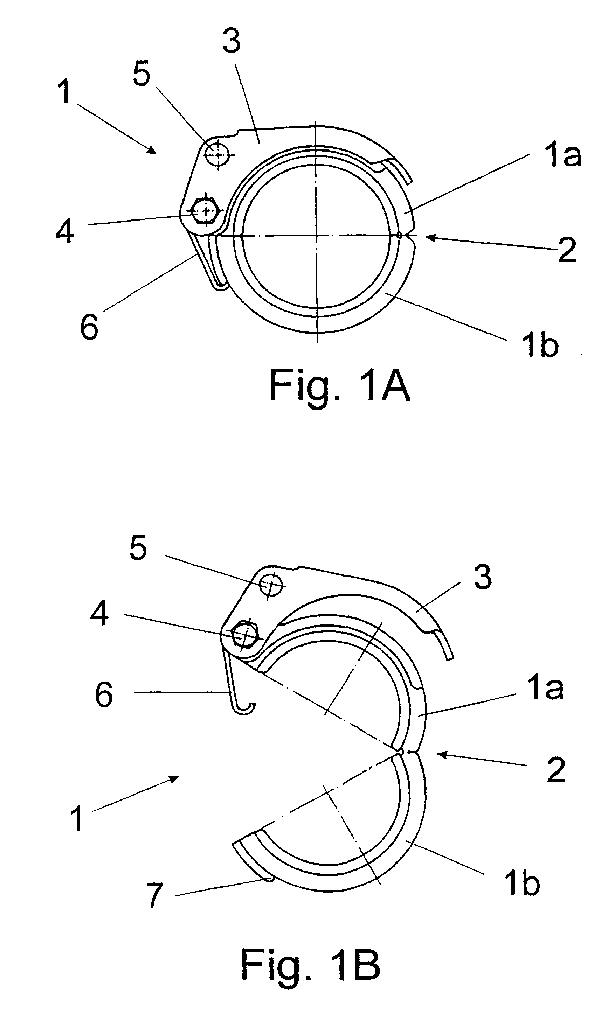

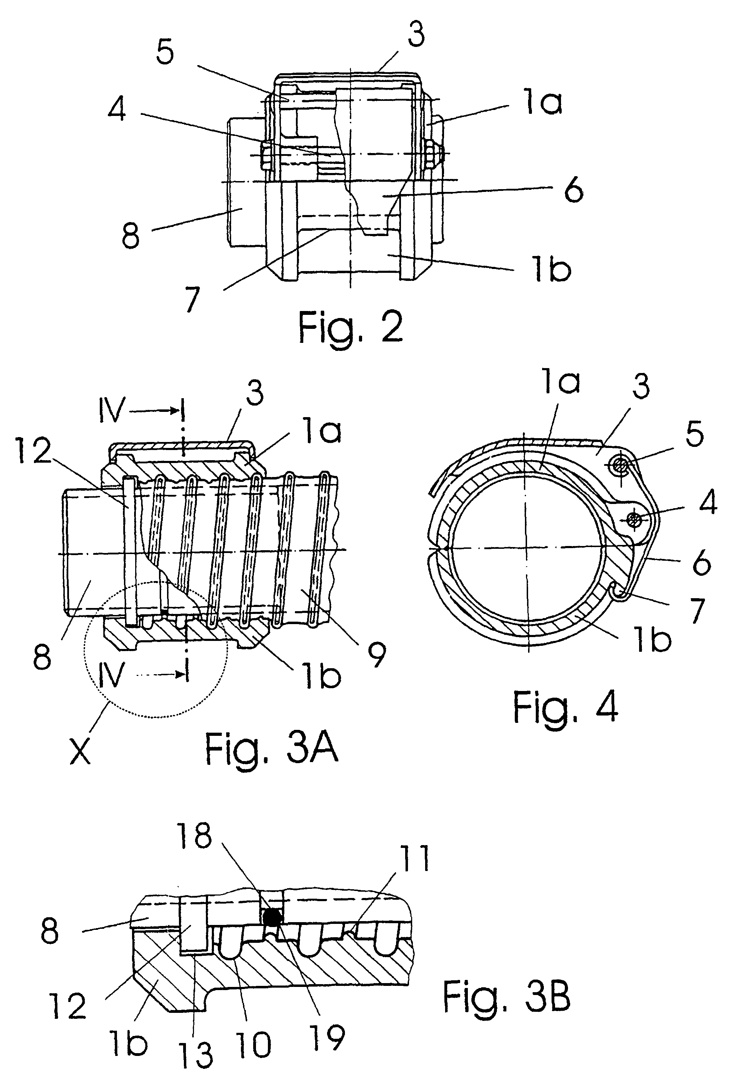

Die Fig. 1 bis 4 zeigen ein erstes bevorzugtes Ausführungsbeispiel der erfindungsgemäßen Kupplung für Stahlwendelschläuche. Im dargestellten und insoweit bevorzugte Ausführungsbeispiel besteht eine Klemmbacke 1 aus zwei Teilschalen 1a und 1b, welche einstückig aus Kunststoff hergestellt sind und zum Ermöglichen des Aufklappens eine als Filmscharnier 2 ausgebildete Knickstelle aufweisen. Die Klemmbacke 1 weist am freien Umfangsende der Teilschale 1a einen Spannhebel 3 auf, der mittels eines Bolzen 4 schwenkbar an der Teilschale 1a angelenkt ist, wie besonders deutlich in Fig. 1B erkennbar ist. Der Spannhebel 3 weist ferner einen Stift 5 auf, der zum Festlegen des Endes einer Schließfeder 6 dient. Das freie Ende der Schließfeder 6 ist dabei so ausgebildet, daß es mit einer an der Teilschale 1b angeordneten Nase 7 zusammenwirkt, um den notwendigen Schließdruck aufzubringen, wie besonders deutlich Fig. 4 zu entnehmen ist.

Zur sicheren Verbindung von Klemmbacke 1 mit einer Tülle 8, auf die das Ende eines Stahlwendelschlauches 9 aufgeschoben ist, ist im dargestellten und insoweit bevorzugten Ausführungsbeispiel eine spiralförmig verlaufende Rille 10 zur Aufnahme der Stahlwendel des Schlauches 9 im Inneren der Klemmbacke 1 vorgesehen, wie dies besonders deutlich den Fig. 3A und 3B zu entnehmen ist. Zur Erhöhung des Reibschlusses zwischen Tülle 8 und Schlauch 9 dient eine parallel zur spiralförmigen Rille 10 verlaufende stegartige Erhöhung 11, wie sie in den Fig. 3A und 3B dargestellt ist. Mit dieser Ausgestaltung wird zuverlässig ausgeschlossen, daß sich bei einer Torsion des Stahlwendelschlauches 9 dessen Ende aus der Klemmbacke 1 "herausschraubt".

Zur Aufnahme des notwendigen Axialzuges muß auch die Tülle 8 formschlüssig mit der Klemmbacke 1 verbunden sein. Dazu weist die Tülle einen axial unverschiebbar angeordneten Flansch auf, der bevorzugt als Ringbund 12 ausgebildet ist und von einer Ringnut 13 der Klemmbacke 1 aufgenommen wird. Auch dies geht besonders deutlich aus den Fig. 3A und 3B hervor.

Zur zuverlässigen Abdichtung zwischen Tülle 8 und Schlauch 9 weist die Tülle 8 eine Ringnut 18 auf, in die eine Dichtung eingelegt ist, die im dargestellten Ausführungsbeispiel als Rundschnurring 19 ausgebildet ist. Es ist klar, daß dabei der Durchmesser des Rundschnurrings 19 so auf die Ringnut 18 abgestimmt ist, daß der Rundschnurring 19 über den Außendurchmesser der Tülle 8 herausragt.

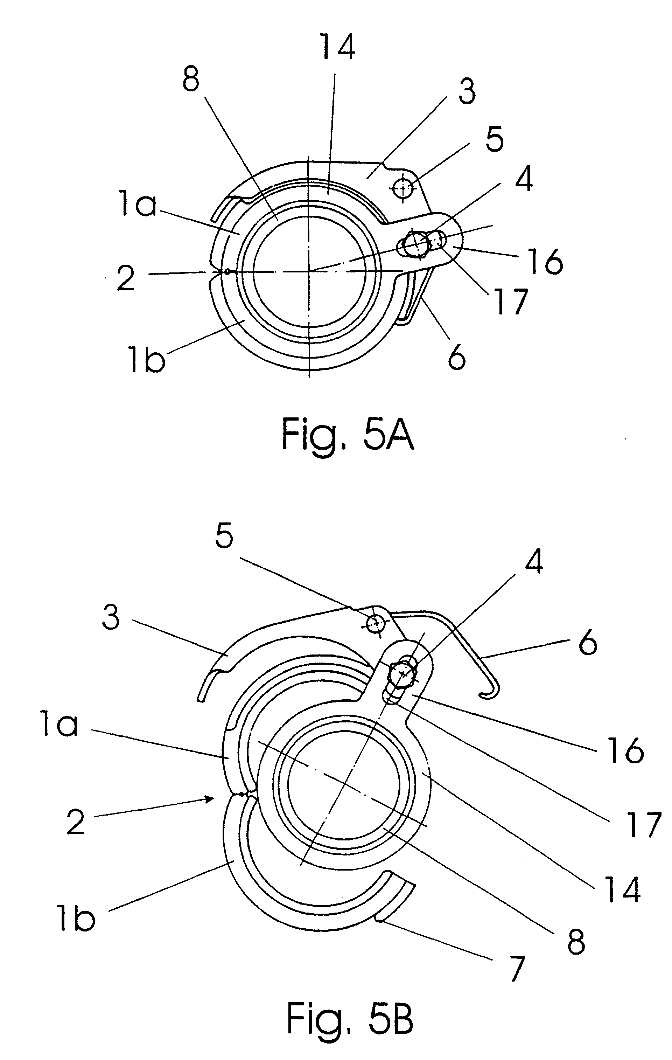

Die Fig. 5 bis 8 zeigen ein weiteres Ausführungsbeispiel der erfindungsgemäßen Kupplung, bei dem die Klemmbacke 1 und die Tülle 8 gelenkig miteinander verbunden sind, so daß diese weitere Ausführungsform der erfindungsgemäßen Kupplung als "unverlierbare" Kupplung verwendet werden kann. Zur Vereinfachung sind die gleichen Teile mit gleichen Bezugszeichen versehen.

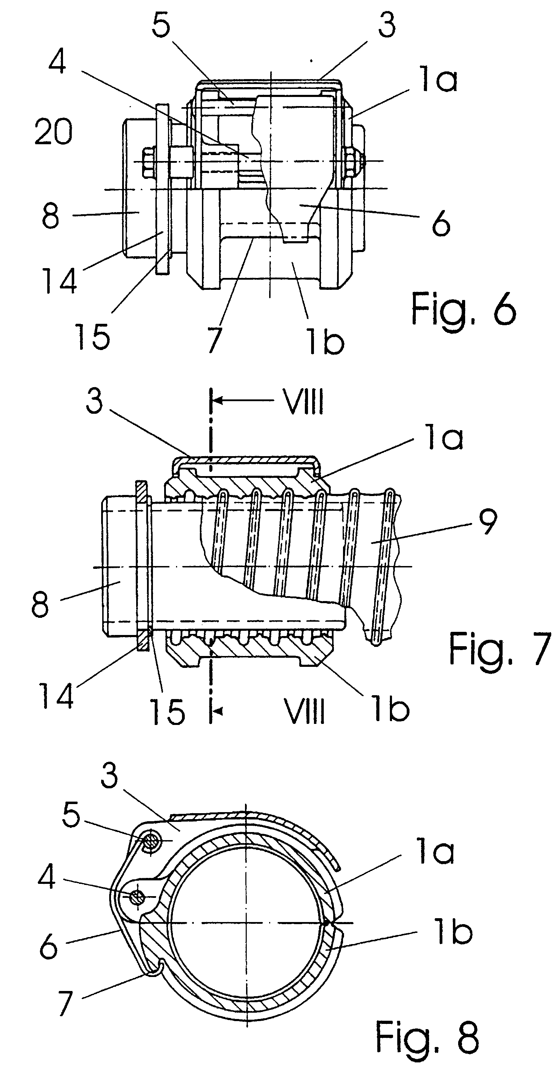

Im Unterschied zur ersten Ausführungsform weist die Tülle 8 hier einen Flansch 14 auf, der nicht innerhalb der Klemmbacke 1, sondern am freien Ende der Tülle 8 angeordnet ist, wie besonders deutlich den Fig. 6 und 7 entnommen werden kann. Dieser Flansch 14 stützt sich an einer am freien Ende der Tülle 8 befindlichen nicht näher bezeichneten Schulter ab und ist mit einem Sprengring 15 gesichert, so daß der Flansch 14 axial unverschiebbar, jedoch frei drehbar auf der Tülle 8 angeordnet ist.

Bei dieser Ausführungsform weist nun der Flansch 14 einen Steg 16 auf, der mit einem Langlauf 17 versehen ist, daß von dem den Spannhebel 3 mit der Klemmbacke 1 verbindenden Bolzen 4 durchquert wird. Wie aus Fig. 5B hervorgeht, dient dabei das Langloch dazu, die Tülle 8 aus der Teilschale 1a nach Aufklappen der Teilschale 1b herauszuschwenken. Je nach Anordnung von Klemmbacke 1 und Flansch 14 kann es notwendig sein, den Abstand beider Teile im Bereich des Bolzens 4 durch ein Distanzstück 20 zu definieren, wie dies in Fig. 6 dargestellt ist.

## Patentansprüche

1. Schlauchkupplung mit einer aus wenigstens zwei Teilschalen (1a, 1b) gebildeten, einen Schlauch umfassenden Schelle und einem über einen Bolzen (4) am freien Umfangsende eines der Teilschalen (1a, 1b) angelenkten Spannhebel (3), der zur kraftschlüssigen Verbindung zwischen dem Schlauch und einer darin eingeschobenen Tülle (8) über eine Schließfeder (6) mit dem anderen freien Umfangsende der korrespondierenden Teilschale (1a bzw. 1b) verbindbar ist, wobei die Klemmbacke (1) mittels einem auf der Tülle (8) axial unverschiebbar angeordneten Flansch in axialer Richtung auf der Tülle (8) fixierbar ist,
**dadurch gekennzeichnet, daß** die Schelle mehrere Teilschalen (1a, 1b) aufweist und als sogenannte Klemmbacke (1) einstückig aus Kunststoff hergestellt ist, wobei die Verbindung/en zwischen den Teilschalen (1a 1b) als Filmscharnier/e ausgebildet ist/sind, daß als Schlauch ein Stahlwendelschlauch (9) zur Anwendung kommt und daß die Teilschalen (1a, 1b im Inneren der Klemmbacke (1) eine spiralförmig verlaufende Rille (10) zur Aufnahme der Stahlwendel des Stahlwendelschlauches (9) aufweisen und so den Stahlwendelschlauch (9) formschlüssig umgreifen.

2. Kupplung nach Anspruch 1,
**dadurch gekennzeichnet, daß** die Teilschalen (1a, 1b) im Inneren der Klemmbacke (1) wenigstens eine parallel zur spiralförmigen Rille (10) verlaufende stegartige Erhöhung (11) aufweisen.

3. Kupplung nach Anspruch 1 oder 2,
**dadurch gekennzeichnet, daß** der auf der Tülle (8) befindliche Flansch als Ringbund (12) ausgebildet ist und daß die Teilschalen (1a, 1b) im Inneren der Klemmbacke (1) eine zur Aufnahme des Ringbundes (12) vorgesehene Ringnut (13) aufweisen.

4. Kupplung nach Anspruch 1 oder 2,
**dadurch gekennzeichnet, daß** die Tülle (8) an ihrem dem Schlauch (9) abgewandten freien Ende einen Flansch (14) aufweist, der mit der Klemmbacke (1) beweglich verbunden ist.

5. Kupplung nach Anspruch 4,
**dadurch gekennzeichnet, daß** der Flansch (14) einen Steg (16) aufweist, der mit einem Langloch (17) versehen ist, das von dem den Spannhebel (3) mit der Klemmbacke (1) verbindenden Bolzen (4) durchquert wird.

6. Kupplung nach Anspruch 4 oder 5,
**dadurch gekennzeichnet, daß** der Flansch (14) axial unverschiebbar, jedoch drehbar auf der Tülle (8) angeordnet ist.

7. Kupplung nach einem der Ansprüche 1 bis 6,
**dadurch gekennzeichnet, daß** die Tülle (8) in ihrem im vom Schlauchende übergriffenen Bereich eine Ringnut (18) aufweist, in die eine Dichtung eingelegt ist.

8. Kupplung nach Anspruch 7,
**dadurch gekennzeichnet, daß** als Dichtung ein Rundschnurring (19) verwendet wird.

9. Kupplung nach einem der Ansprüche 1 bis 8,
**dadurch gekennzeichnet, daß** der Spannhebel (3) aus Edelstahl besteht.

10. Kupplung nach einem der Ansprüche 1 bis 9, wobei die Schließfeder (6) an einem parallel zum Bolzen (4) angeordneten Stift (5) angelenkt ist,
**dadurch gekennzeichnet, daß** der Bolzen (4), der Stift (5) und/oder die Schließfeder (6) aus rostfreiem Stahl bestehen.

## Claims

1. A hose coupling comprising a clip consisting of at least two partial shells (1a, 1b) enclosing a hose, and a clamping lever (3) which via a bolt (4) is articulated on the free peripheral end of one of the partial shells (1a, 1b) and which can be connected to the other free peripheral end of the corresponding semi-cylindrical cup (1a or 1b) via a closing spring (6) to create a non-positive connection between the hose and a sleeve (8) inserted in said hose, with the clamping jaw (1) being fixable on the sleeve (8) in axial direction by means of a flange which is arranged axially displaceable on said sleeve (8),
**characterized in that** the clip comprises several partial shells (1a, 1b) and is configured as a single-piece clamping jaw (1) made of a plastic material, with the connection(s) between the partial shells (1a, 1b) being configured as a film hinge/film hinges, that the hose is a corrugated flexible hose (9) and that the partial shells (1a, 1b) on the inside of the clamping jaw (1) comprise a helical groove (10) which receives the corrugations of the corrugated flexible hose (9) and in this way hold said corrugated flexible hose (9) in a form-fit connection.

2. The coupling according to claim 1,
**characterized in that** the partial shells (1a, 1b) in the interior of the clamping jaw (1) comprise at least one web-like elevation (11) extending parallel to the spiral-shaped groove (10).

3. The coupling according to claim 1 or 2,
**characterized in that** the flange on the sleeve (8) is an annular collar (12) and that the partial shells (1a, 1b) in the interior of the clamping jaw (1) comprise an annular groove (13) for receiving the annular collar (12).

4. The coupling according to claim 1 or 2,
**characterized in that** the sleeve (8), at its free end pointing away from the hose (9), comprises a flange (14) which is movably connected to the clamping jaw (1).

5. The coupling according to claim 4,
**characterized in that** the flange (14) comprises a web (16) which comprises an elongated hole (17) through which a bolt (4) reaches, with said bolt (4) interconnecting the clamping lever (3) and the clamping jaw (1).

6. The coupling according to claim 4 or 5,
**characterized in that** the flange (14) is arranged on the sleeve (8) so as to be rotatable but so that it cannot be axially displaced.

7. The coupling according to one of claims 1 to 6,
**characterized in that** the sleeve (8) comprises an annular groove (18) in its region encompassed by the hose end, with a seal being inserted in said annular groove (18).

8. The coupling according to claim 7,
**characterized in that** the seal is a toroidal sealing ring (19).

9. The coupling according to one of claims 1 to 8,
**characterized in that** the clamping lever (3) is made of stainless steel.

10. The coupling according to one of claims 1 to 9, with the closing spring (6) being hinged to a pin (5) arranged parallel to the bolt (4),
**characterized in that** the bolt (4), the pin (5) and/or the closing spring (6) are made of stainless steel.

## Revendications

1. Raccord pour tuyaux flexibles comprenant un collier de serrage formé par au moins deux coquilles partielles (1a, 1b) entourant un tuyau flexible, et un levier de serrage (3) articulé à l'aide d'un boulon (4) sur l'extrémité circonférentielle libre de l'une des coquilles partielles (1a, 1b) pouvant être raccordé à l'autre extrémité circonférentielle libre de la coquille partielle (1a ou 1b) correspondante à l'aide d'un ressort de serrage (6) pour un raccordement par force entre le tuyau flexible et une douille (8) introduite dans ce dernier, la mâchoire de serrage (1) pouvant être fixée dans le sens axial sur la douille (8) à l'aide d'une bride disposée sans déplacement axial sur la douille (8), **caractérisé en ce que** le collier de serrage présente plusieurs coquilles partielles (1a 1b) et qu'il est réalisé en une seule pièce en matière plastique que l'on appelle mâchoire de serrage (1), le (les) raccordement(s) entre les coquilles partielles (1a, 1b) étant configuré(s) comme une (des) chamière(s) pelliculaire(s), **en ce qu'**en tant que tuyau flexible on utilise un tuyau à spirales d'acier (9), et **en ce que** les coquilles partielles (1a, 1b) présentent, à l'intérieur de la mâchoire de serrage (1) une rainure (10) s'étendant en forme de spirale pour loger les spirales d'acier du tuyau à spirales d'acier (9), pour ainsi entourer le tuyau à spirales d'acier par complémentarité de forme.

2. Raccord selon la revendication 1, **caractérisé en ce que** les coquilles partielles (1a, 1b) à l'intérieur de la mâchoire de serrage (1) présentent au moins une élévation (11) telle qu'une nervure s'étendant parallèlement à la rainure (10) en forme de spirale.

3. Raccord selon la revendication 1 ou 2, **caractérisé en ce que** la bride située sur la douille (8) est configurée comme collet annulaire (12), et **en ce que** les coquilles partielles (1a, 1b) à l'intérieur de la mâchoire de serrage (1) présentent une gorge annulaire (13) pour loger le collet annulaire (12).

4. Raccord selon la revendication 1 ou 2, **caractérisé en ce que** la douille (8), sur son extrémité libre opposée au tuyau flexible (9), présente une bride (14) qui est reliée de façon mobile à la mâchoire de serrage (1).

5. Raccord selon la revendication 4, **caractérisé en ce que** la bride (14) présente une nervure (16) pourvue d'un trou oblong (17) qui est traversé par le boulon (4) reliant le levier de serrage (3) à la mâchoire de serrage (1).

6. Raccord selon la revendication 4 ou 5, **caractérisé en ce que** la bride (14) est disposée sans déplacement axial mais pivotante sur la douille (8).

7. Raccord selon l'une des revendications 1 à 6, **caractérisé en ce que** la douille (8), dans sa zone recouverte par l'extrémité du tuyau flexible, présente une gorge annulaire (18) dans laquelle est placé un joint d'étanchéité.

8. Raccord selon la revendication 7, **caractérisé en ce qu'**en tant que joint d'étanchéité on utilise un joint torique (19).

9. Raccord selon l'une des revendications 1 à 8, **caractérisé en ce que** le levier de serrage (3) est en acier spécial.

10. Raccord selon l'une des revendications 1 à 9, le ressort de serrage (6) étant articulé sur une goupille (5) disposée parallèlement au boulon (4), **caractérisé en ce que** le boulon (4), la goupille (5) et/ou le ressort de serrage (6) sont en acier inoxydable.
